# FASCICULE DE BREVET EUROPEEN

(11) **EP 1 386 684 B1**
(45) Date de publication et mention de la délivrance du brevet: **04.05.2005**
(21) Numéro de dépôt: 03356086.3
(22) Date de dépôt: 05.06.2003
(51) Int. Cl.: B23B 51/02, E21B 10/58

(54) **Outil de percage avec plaquette de coupe**
Bohrer mit Scheindeinsatz
Drill bit with cutting insert

(30) Priorité: 14.06.2002 FR 0207380
(43) Date de publication de la demande: 04.02.2004
(73) Titulaire: Diager, 39800 Poligny (FR)
(72) Inventeur: Rigolet, Pierre, 39800 Montmolier (FR); Vaivre, André, 39800 Poligny (FR); Badey, Marc, 39800 Chamole (FR); Dominique, Maurice, 39800 Poligny (FR); Lamy, Sylvain, 39800 Poligny (FR)
(74) Mandataire: Bratel, Gérard

(56) Documents cités:
- EP-A- 0 763 649
- EP-A- 0 947 662
- EP-A- 0 972 599
- DE-U- 29 721 790
- DE-U- 29 922 291
- FR-A- 1 156 650
- GB-A- 758 084
- GB-A- 1 008 029
- GB-A- 1 062 158
- US-A- 1 847 302

## Description

La présente invention se rapporte au domaine des forets, et autres outils de perçage rotatifs analogues, dont la partie coupante comporte des plaquettes de coupe rapportées. Plus particulièrement, l'invention concerne un outil de perçage rotatif, du genre foret ou analogue, selon le préambule de la revendication 1.

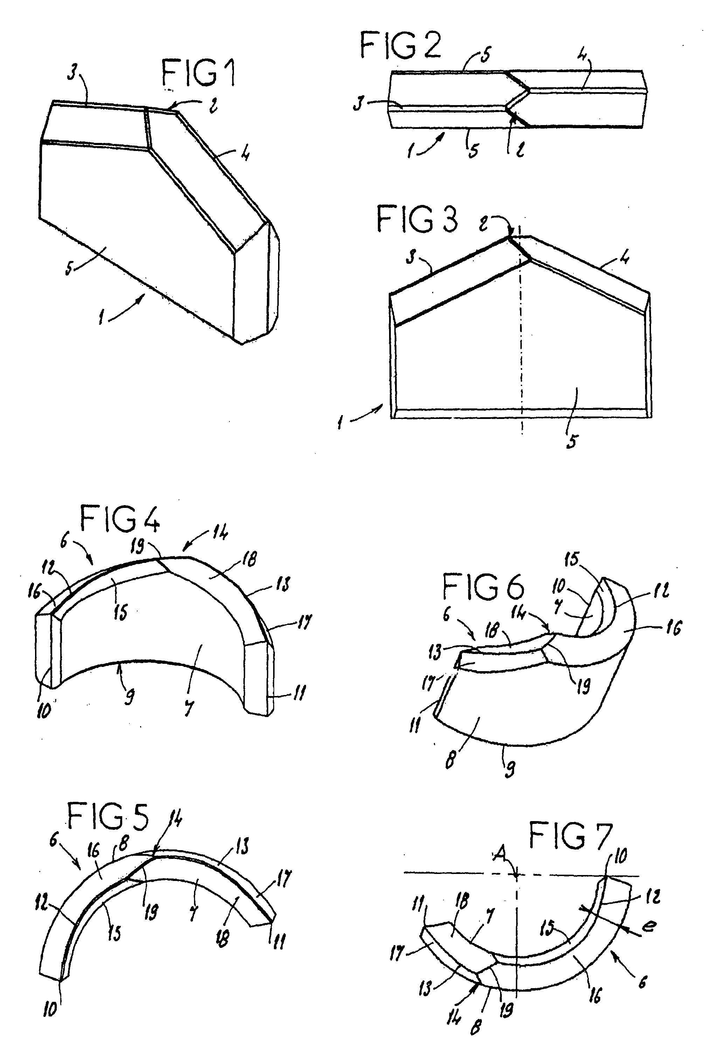

D'une manière classique, les plaquettes de coupe par exemple en carbure, rapportées sur les outils de perçage rotatifs, possèdent une forme générale plane, de contour polygonal. Une plaquette de coupe classique est représentée sur les figures 1 à 3 du dessin schématique annexé, qui montrent plus particulièrement :
Figure 1 : une vue en perspective d'une plaquette de coupe classique ;
Figure 2 : une vue de face de la plaquette de coupe de la figure 1 ;
Figure 3 : une vue de côté de la même plaquette de coupe.

De forme générale pentagonale, cette plaquette de coupe 1 possède une pointe 2, et deux arêtes de coupe 3 et 4 qui convergent vers la partie centrale 2. Les deux grandes faces latérales opposées 5 de la plaquette 1 sont ici des faces planes, pentagonales.

De telles plaquettes de coupe sont notamment utilisables pour la réalisation de la partie coupante d'un foret, telle que celle décrite dans le brevet français N° 95.11124/2738762, ou le brevet européen correspondant N° 0763649, au nom du Demandeur.

Ces documents décrivent une tête de foret qui reçoit trois plaquettes de coupe, de la forme précédemment décrite, à savoir une plaquette de coupe centrale disposée suivant une direction diamétrale de la tête de foret, et deux plaquettes de coupe latérales, disposées de part et d'autre de la plaquette centrale, parallèlement ou non à celle-ci. Ces trois plaquettes de coupe, planes, forment au total six arêtes de coupe. Elles définissent aussi, par leurs bords situés à la périphérie du foret, six points d'appui ou de guidage, qui sont de préférence concentriques et qui assurent ainsi, au cours du perçage, un guidage précis du foret dans le trou réalisé.

Dans un tel foret à trois plaquettes, parallèles entre elles ou non, la place disponible pour la réalisation de rainures longitudinales d'évacuation des poussières reste limitée. De plus, l'orientation des arêtes de coupe des deux plaquettes latérales n'est pas optimale, et elle engendre des frottements.

Le modèle d'utilité allemand DE 29721790 U montre une tête de coupe de conformation tubulaire, qui porte une plaquette de coupe courbée en "S", laquelle passe par l'axe central de la tête de coupe. La plaquette de coupe en "S" possède deux flancs concaves et deux flancs convexes, qui sont réunis par une face de base, par deux bords extrêmes parallèles à l'axe central de l'outil et pouvant assurer une fonction de guidage de cet outil, et, du côté opposé à la face de base, par une partie coupante avec deux arêtes de coupe indinées et une pointe centrale. La plaquette de coupe en "S" n'est tenue que par ses bords extrêmes, elle est de forme complexe difficile à obtenir, et elle ne peut être qu'une plaquette unique.

La présente invention vise à éviter ces inconvénients, en fournissant une plaquette de coupe perfectionnée qui, utilisée sur un foret du genre ici considéré, permet d'en améliorer les performances, en particulier du point de vue du dégagement des poussières et de l'efficacité de coupe, tout en conservant les avantages relatifs à la précision de guidage du foret.

A cet effet, l'invention a pour objet un outil de perçage rotatif du genre foret ou analogue, possédant une tête de coupe recevant au moins une plaquette de coupe de forme arquée, c'est-à-dire avec un flanc concave et un flanc convexe, qui sont réunis par une face de base, par deux bords extrêmes parallèles à l'axe central de l'outil dont l'un au moins est apte à assurer une fonction de guidage pour le foret ou autre outil de perçage, et, du côté opposé à la face de base, par au moins une partie coupante, avec au moins une arête de coupe et/ou au moins une pointe, cet outil de perçage ayant, insérées dans sa tête de coupe, des plaquettes arquées à disposition latérale, dont les bords extrêmes se situent à la périphérie de la tête de coupe de l'outil, et dont les flancs convexes sont tournés vers l'axe central de la tête de coupe de l'outil.

La forme arquée de la plaquette de coupe résulte de sa délimitation par deux flancs (ou faces latérales), l'un concave et l'autre convexe. Selon une forme de réalisation de cet outil, le flanc concave de la plaquette de coupe est constitué par une première surface cylindrique et le flanc convexe est constitué par une seconde surface cylindrique, les deux surfaces cylindriques étant coaxiales et s'étendant donc parallèlement l'une à l'autre, à une distance définissant une épaisseur constante de la plaquette de coupe arquée.

Les variantes de la plaquette de coupe de forme arquée résultent, en particulier, des diverses possibilités de réalisation de sa partie coupante, opposée à sa face de base, cette dernière étant de préférence une simple face plane.

Selon un mode d'exécution, la plaquette arquée possède une partie coupante unique, continue, pourvue de deux arêtes de coupe montantes, incurvées, qui partent respectivement des sommets des deux bords extrêmes de la plaquette, et qui convergent vers la région d'une pointe. Les deux arêtes de coupe incurvées peuvent ici être d'égale longueur, la plaquette arquée possédant ainsi une allure générale symétrique par rapport à un plan médian. Les deux arêtes de coupe incurvées peuvent aussi être de longueur inégale, et converger ainsi vers la région d'une pointe excentrée, la plaquette arquée possédant dans ce cas une allure dissymétrique.

Selon un autre mode d'exécution, la plaquette arquée possède deux parties coupantes disjointes avec arêtes de coupe respectives, qui partent respectivement des sommets des deux bords extrêmes de la plaquette, et qui sont séparées l'une de l'autre par un évidement intermédiaire.

Selon encore un autre mode d'exécution, la plaquette arquée possède une partie coupante pourvue d'au moins une pointe du type "brise-béton", en particulier deux pointes de ce type situées vers les extrémités de la partie coupante de la plaquette.

De telles pointes peuvent être combinées avec au moins une arête de coupe, alors présente dans la ou les zones intermédiaires entre les pointes, la ou les arêtes de coupe faisant ainsi le raccord entre les pointes. Selon une autre possibilité, les pointes ne sont pas combinées avec des arêtes de coupe, auquel cas la partie coupante de la plaquette arquée présente au moins un évidement, situé entre lesdites pointes.

Selon une autre caractéristique avantageuse, la plaquette arquée comporte, sur son flanc concave ou son flanc convexe, un ergot ou index pour le positionnement de cette plaquette de coupe dans son logement, au niveau de la tête de coupe du foret ou autre outil de perçage rotatif analogue.

Selon un mode de réalisation de l'outil de perçage, objet de l'invention, sa tête de coupe comprend une plaquette centrale plane, disposée suivant un diamètre de ladite tête, et deux plaquettes latérales arquées, disposées de part et d'autre de la plaquette centrale plane, les flancs convexes des deux plaquettes arquées étant tournés respectivement vers les deux grandes faces latérales opposées de la plaquette centrale plane.

Selon un autre mode de réalisation d'un tel outil de perçage, sa tête de coupe comprend une plaquette centrale de forme étoilée, à branches radiales planes, centrée sur l'axe de l'outil de perçage, et une pluralité de plaquettes latérales arquées placées dans les secteurs définis entre les branches radiales ou dans le prolongement des branches radiales de la plaquette centrale, les flancs convexes des différentes plaquettes arquées étant tournés vers le centre de la plaquette centrale.

Dans tous les cas, la tête de coupe de l'outil de perçage peut comporter, à sa périphérie, des rainures longitudinales d'évacuation des poussières de perçage, situées dans la région de la concavité de chacune des plaquettes de coupe arquées.

En particulier, l'invention permet la réalisation d'outils de perçage à trois plaquettes, dont une plaquette centrale et deux plaquettes latérales, reprenant le principe général des brevets français N° 95.11124/2738762 et européen N° 0763649 précités, mais en substituant, aux deux plaquettes latérales planes de ces brevets, deux plaquettes latérales arquées telles que définies ci-dessus. L'outil de perçage ainsi réalisé conserve l'avantage de pouvoir posséder six points d'appui ou de guidage concentriques, constitués par les deux extrémités de la plaquette centrale plane, et par les deux extrémités de chacune des deux plaquettes latérales arquées, pour un parfait guidage de l'outil dans le trou en cours de perçage. Grâce à l'utilisation de plaquettes de forme arquée, cet outil de perçage est encore sensiblement amélioré sur les points suivants :

### a) Amélioration du dégagement des poussières de perçage

La présence des plaquettes de coupe arquées permet, comme indiqué ci-dessus, de ménager dans la tête de coupe des rainures d'évacuation supplémentaires (rainures secondaires), qui s'ajoutent aux rainures d'évacuation existantes (rainures principales), tout en permettant l'agrandissement de ces rainures principales.

Ceci permet d'optimiser l'espace coupe/évacuation, en adaptant la dimension des plaquettes latérales arquées et leur disposition (angulaire et en hauteur) par rapport à celles de la plaquette centrale.

### b) Amélioration de la capacité de perçage

Par une meilleure orientation des arêtes de coupe des plaquettes latérales arquées (en comparaison avec les arêtes de coupe de plaquettes latérales planes selon les brevets précités), puisque ces arêtes de coupe sont pratiquement perpendiculaires à la direction de la vitesse linéaire due à la rotation du foret, on obtient une amélioration de la fonction de coupe, et une diminution des frottements.

### c) Amélioration de la résistance de la partie coupante en travail :

La courbure (concave ou convexe) des faces latérales de la plaquette arquée fait que cette plaquette ne peut être sortie de son logement, ménagé dans la tête de coupe de l'outil, en cas d'effort imposé sur le côté de la plaquette. En d'autres termes, la plaquette arquée présente de par sa forme une meilleure résistance au cisaillement, en comparaison à une plaquette plane pour laquelle la résistance au cisaillement est donnée uniquement par les caractéristiques mécaniques du joint de brasure qui fixe la plaquette dans son logement.

### d) Mise en place facilitée de la plaquette dans son logement :

Lors de la fabrication de la partie coupante du foret, les faces convexes et/ou concaves des plaquettes arquées peuvent servir de guides, pour la mise en place aisée de ces plaquettes dans leurs logements. Cet avantage est encore renforcé, en cas de présence d'un ergot ou index sur l'un des flancs de la plaquette arquée, en particulier son flanc convexe, l'ergot ou l'index servant de repère visuel et facilitant le positionnement final de la plaquette dans son logement

De toute façon, l'invention sera mieux comprise à l'aide de la description qui suit, en référence au dessin schématique annexé représentant, à titre d'exemples, des formes d'exécution de cette plaquette de coupe, et des forets utilisant de telles plaquettes de coupe :
Figures 1 à 3 (déjà mentionnées) montrent une plaquette de coupe plane, selon l'état de la technique ;
Figure 4 est une vue en perspective d'une première forme d'exécution de la plaquette de coupe arquée, conforme à l'invention ;
Figure 5 est une vue de dessus de la plaquette de coupe de la figure 4 ;
Figure 6 est une vue en perspective d'une deuxième forme d'exécution de la plaquette de coupe arquée ;
Figure 7 est une vue de dessus de la plaquette de coupe de la figure 6;

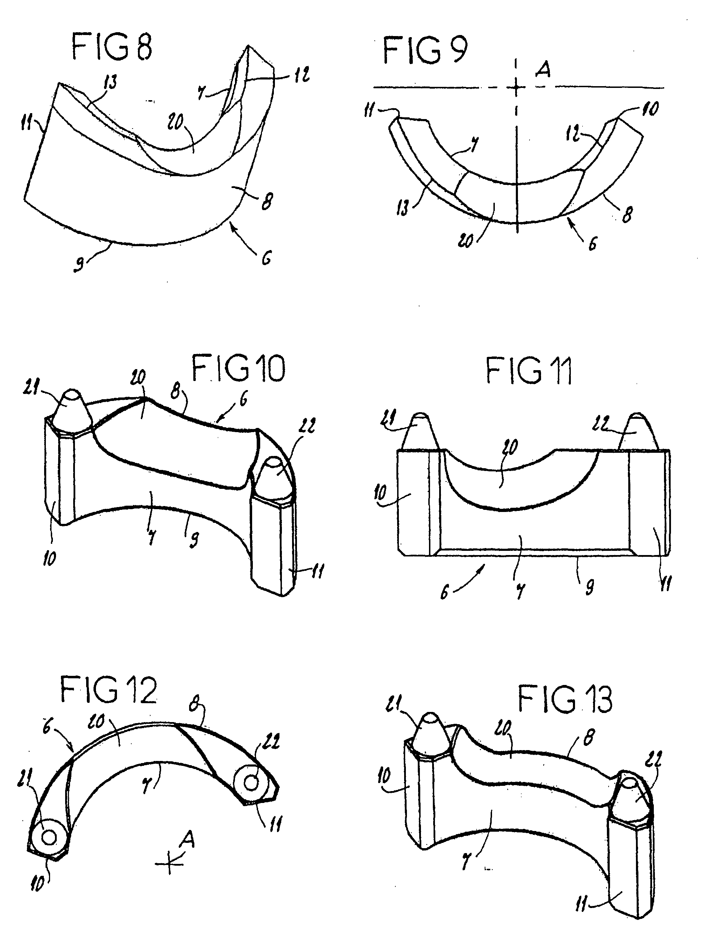

Figure 8 est une vue en perspective d'une troisième forme d'exécution de la plaquette de coupe arquée ;
Figure 9 est une vue de dessus de la plaquette de coupe de la figure 8 ;
Figure 10 est une vue en perspective d'une quatrième forme d'exécution de la plaquette de coupe arquée ;
Figure 11 est une vue de côté de la plaquette de coupe de la figure 10 ;
Figure 12 est une vue de dessus de la plaquette de coupe des figures 10 et 11 ;

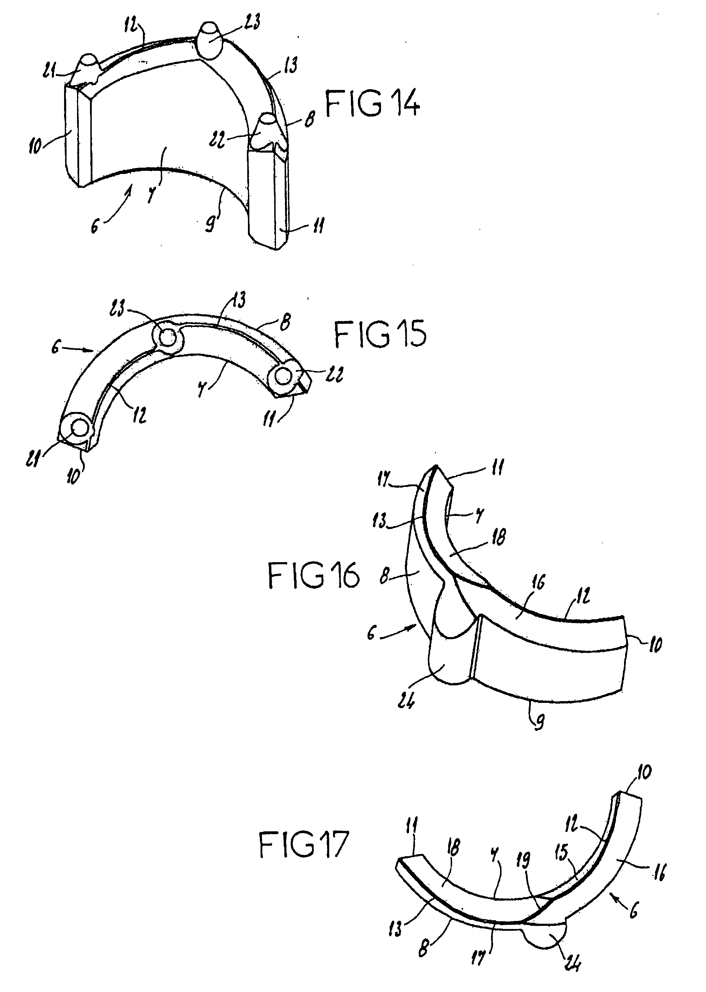

Figure 13 est une vue en perspective d'une variante de la plaquette de coupe des figures 10 à 12 ;
Figure 14 est une vue en perspective d'une autre forme d'exécution de la plaquette de coupe arquée ;
Figure 15 est une vue de dessus de la plaquette de coupe de la figure 14 ;
Figure 16 est une vue en perspective d'une dernière forme d'exécution de la plaquette de coupe arquée ;
Figure 17 est une vue de dessus de la plaquette de coupe de la figure 16 ;

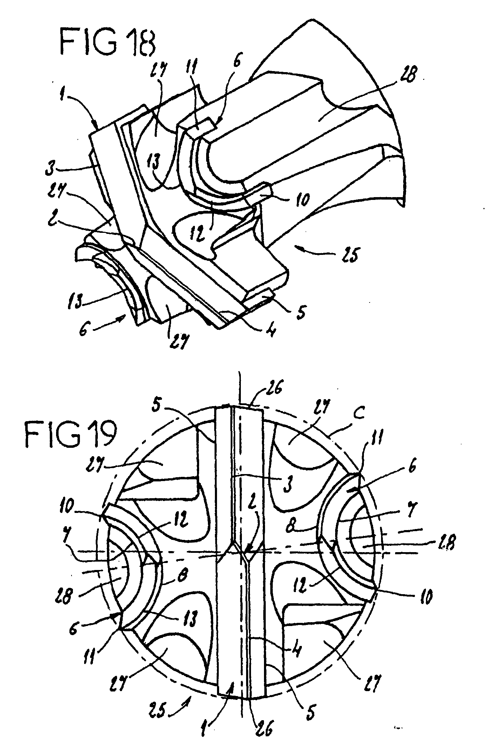

Figure 18 est une vue en perspective d'une tête de coupe de foret, avec plaquettes arquées ;

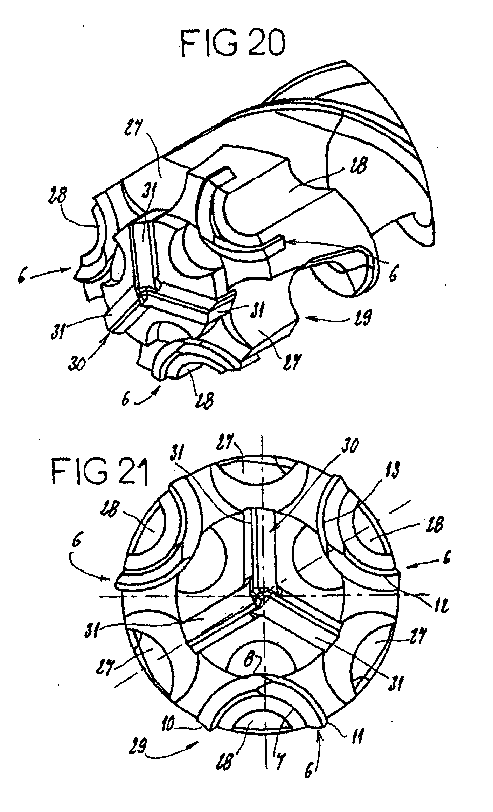

Figure 19 est une vue en bout de la tête de coupe de la figure 18 ;
Figure 20 est une vue en perspective d'une autre tête de coupe de foret, avec plaquettes arquées ;
Figure 21 est une vue en bout de la tête de coupe de la figure 20.

Les figures 4 et 5 montrent une première forme d'exécution d'une plaquette de coupe arquée 6. Cette plaquette de coupe 6 peut être considérée comme "taillée" dans un cylindre creux. Elle comporte ainsi un flanc concave 7, constitué par une première surface cylindrique, et un flanc convexe 8, constitué par une seconde surface cylindrique, les deux surfaces cylindriques 7 et 8 possédant un même axe A et s'étendant ainsi parallèlement l'une à l'autre, à une distance définissant l'épaisseur e constante de la plaquette de coupe 6.

Les deux flancs 7 et 8 de la plaquette de coupe 6 sont réunis par une face de base plane 9, qui s'étend dans un plan perpendiculaire à l'axe A.

Les deux flancs 7 et 8 de la plaquette de coupe 6 sont aussi réunis par deux bords extrêmes 10 et 11, rectilignes, qui s'étendent parallèlement à l'axe A, donc perpendiculairement à la face de base 9. Enfin, les deux flancs 7 et 8 de la plaquette de coupe 6 sont réunis, du côté opposé à la face de base 9, par une partie coupante, ici unique. La partie coupante possède deux arêtes de coupe 12 et 13, incurvées et montantes, qui partent respectivement des sommets des deux bords extrêmes 10 et 11, et qui convergent vers la région d'une pointe centrale 14, les deux arêtes de coupe 12 et 13 étant ici d'égale longueur.

Dans le détail, la première arête de coupe 12 se situe entre une face de coupe incurvée 15 et une face de dépouille incurvée 16. La seconde arête de coupe 13 se situe entre une face de coupe incurvée 17 et une face de dépouille incurvée 18. Dans la région de la pointe 14, les deux faces de dépouille 16 et 18 sont adjacentes, et se raccordent suivant une ligne 19.

Les figures 6 et 7, sur lesquelles les éléments qui correspondent à ceux des figures 4 et 5 sont désignés par les mêmes repères, montrent une deuxième forme d'exécution d'une plaquette de coupe arquée 6, qui se différencie de la précédente par la disposition dissymétrique des deux arêtes de coupe 12 et 13 de la partie coupante unique. Les deux arêtes de coupe 12 et 13 sont ici, en effet, de longueur inégale, la première arête de coupe 12 possédant par exemple une longueur sensiblement supérieure à celle de la seconde arête de coupe 13. Ces deux arêtes de coupe 12 et 13 sont toujours convergentes vers la région d'une pointe 14, mais cette pointe 14 est ici excentrée.

Les figures 8 à 13 montrent des réalisations de plaquettes de coupe arquées 6 à double partie coupante.

Plus particulièrement, les figures 8 et 9 montrent une forme d'exécution, dans laquelle la plaquette de coupe arquée 6 possède deux parties coupantes distinctes, avec des arêtes de coupe respectives 12 et 13, la première arête de coupe 12 partant du sommet du bord extrême 10, et la seconde arête de coupe 13 partant du sommet de l'autre bord extrême 11. Les deux parties coupantes, donc les deux arêtes de coupe 12 et 13, sont séparées l'une de l'autre par un évidement intermédiaire 20.

Les figures 10, 11 et 12 montrent une autre forme d'exécution, dans laquelle la plaquette de coupe arquée 6 possède deux parties coupantes distinctes, constituées respectivement par deux pointes 21 et 22 du type "pointe brise-béton". Les deux pointes 21 et 22 sont situées, respectivement, vers les sommets des deux bords extrêmes 10 et 11 de la plaquette 6, les axes de ces pointes étant inclinées ou parallèles par rapport à l'axe A. Les deux parties coupantes, donc les deux pointes 21 et 22, sont ici encore séparées par un évidement intermédiaire 20, d'allure dissymétrique.

La figure 13 illustre une variante de cette plaquette de coupe arquée 6 à deux pointes 21 et 22, dans laquelle l'évidement intermédiaire 20 est symétrique et d'allure différente.

Comme le montrent les figures 14 et 15, relatives à une autre forme d'exécution découlant des précédentes, le nombre de pointes du type "brise-béton" peut être plus élevé. Dans cet exemple, la plaquette de coupe arquée 6 possède deux pointes 21 et 22, situées vers ses deux extrémités, et une troisième pointe "brise-béton" 23 située dans partie centrale, c'est-à-dire entre les deux premières pointes 21 et 22.

De plus, les figures 14 et 15 montrent qu'au lieu d'évidements intermédiaires, des arêtes de coupe incurvées 12 et 13 peuvent s'étendre entre les pointes 21, 22 et 23, et faire ainsi le raccord entre ces pointes.

Les figures 16 et 17 montrent une dernière forme d'exécution, dans laquelle la plaquette de coupe arquée 6, ici avec partie coupante à deux arêtes de coupe 12 et 13, comporte sur son flanc convexe 8 un ergot ou index 24, qui sert au positionnement de la plaquette 6 dans son logement, sur la tête de coupe d'un foret ou autre outil de perçage rotatif analogue.

Les figures suivantes 18 à 21 illustrent l'application des plaquettes de coupe arquées 6, telles que décrites précédemment, à des têtes de coupe de forets.

Les figures 18 et 19 montrent une tête de coupe 25 d'un foret, de forme générale cylindrique terminée en surface conique, qui reçoit trois plaquettes de coupe.

La première plaquette de coupe, dite plaquette centrale ou principale, est une plaquette plane 1 (telle que celle représentée aux figures 1 à 3), disposée diamétralement dans un logement correspondant en forme de rainure rectiligne, ménagée suivant un plan diamétral de la tête de coupe 25. Les deux autres plaquettes de coupe, dites plaquettes latérales, sont des plaquettes arquées 6 telles que décrites précédemment, disposées de part d'autre de la plaquette centrale 1, dans des logements correspondants de la tête de coupe 25. Les flancs convexes 8 respectifs des deux plaquettes arquées 6 sont tournés vers les deux grandes faces latérales opposées 5 de la plaquette centrale plane 1.

La plaquette centrale plane 1 présente deux arêtes de coupe 3 et 4, qui convergent vers une pointe 2 située sur l'axe central de la tête de coupe 25 et du foret. Chaque plaquette latérale 6 présente deux autres arêtes de coupe 12 et 13, de sorte que la tête de coupe 25 possède, au total, six arêtes de coupe. Dans l'exemple illustré, les arêtes de coupe 12 et 13 des plaquettes latérales arquées 6 sont situées sensiblement au même niveau que les arêtes de coupe 3 et 4 de la plaquette centrale plane 1.

Par ailleurs, les deux bords extrêmes 26 de la plaquette centrale plane 1, et les bords extrêmes respectifs 10 et 11 des deux plaquettes latérales arquées 6, sont parallèles à l'axe de la tête de coupe 25, et tous sensiblement situés sur un même cercle C centré sur l'axe de la tête de coupe 25, pour constituer six points d'appui et de guidage du foret dans un trou en cours de perçage, dont le diamètre correspond alors à celui du cercle C. En variante, les bords extrêmes 10 et/ou 11 des deux plaquettes latérales arquées 6 peuvent se situer en retrait par rapport au cercle ayant pour diamètre la ligne joignant les deux bords extrêmes 26 de la plaquette centrale plane 1, ou encore à l'extérieur de ce cercle.

Quatre rainures longitudinales 27 sont creusées dans la surface latérale cylindrique de la tête de coupe 25, et débouchent dans sa face terminale conique, dans les intervalles existants entre la plaquette de coupe centrale 1 et les deux plaquettes de coupe latérales 6. De plus, deux autres rainures longitudinales 28 sont creusées à la périphérie de la tête de coupe 25, dans la région de la concavité des deux plaquettes de coupe latérales arquées 6. Toutes ces rainures 27 et 28, ici au nombre total de six, contribuent à l'évacuation des poussières de perçage.

Les figures 20 et 21 montrent une autre tête de coupe 29 d'un foret, qui reçoit une plaquette de coupe centrale 30, en forme d'étoile à trois branches 31, et trois plaquettes de coupe latérales arquées 6, telles que précédemment décrites.

La plaquette de coupe centrale 30 est centrée sur l'axe du foret, ses trois branches 31 de forme plane possédant des orientations radiales. Les extrémités des trois branches 31 de la plaquette centrale 30 sont situées sur un cercle dont le diamètre est inférieur à celui de la tête de coupe 29, et inférieur au diamètre du cercle par lequel passent les bords extrêmes 10 et 11 des trois plaquettes arquées 6.

Ces trois plaquettes arquées 6 sont disposées, respectivement, dans les trois secteurs de 120° définis entre les branches 31 de la plaquette centrale 30, les flancs convexes 8 des différentes plaquettes arquées 6 étant tournés vers le centre de la plaquette centrale 30.

De plus, dans la réalisation illustrée, la plaquette de coupe centrale 30 est située "plus haut" que les plaquettes de coupe arquées 6, cette configuration conduisant à une tête de coupe 29 dite "avec pilote", ce pilote étant constitué par la plaquette centrale 30 rehaussée et de diamètre inférieur au diamètre nominal du foret, le diamètre du trou foré étant défini par les bords extérieurs 10 et 11 des plaquettes latérales arquées 6.

Enfin, la tête de coupe 29 présente, pour l'évacuation des poussières de forage, trois rainures périphériques 27 situées au droit des branches 31 de la plaquette de coupe centrale 30, et trois rainures périphériques additionnelles 28 ménagées dans la concavité des trois plaquettes de coupe arquées 6.

L'on ne s'éloignerait pas du cadre de l'invention, telle que définie dans les revendications annexées en modifiant les formes de détail des plaquettes de coupe arquées, ou leur disposition, notamment :
- en prévoyant pour la plaquette toute forme arquée, non seulement inscrite dans un cylindre à base circulaire, mais aussi en forme d'arc d'ellipse ou autre, ou encore résultant de l'assemblage de deux ou plusieurs arcs de caractéristiques différentes ;
- en réalisant une plaquette arquée avec deux arêtes de coupe disposées de façon à ce que les faces de dépouille et les faces de coupe respectives se rejoignent toutes sur une pointe située dans la partie centrale de la plaquette ;
- en réalisant une plaquette arquée avec une seule arête de coupe, donc une seule face de coupe et une seule face de dépouille ;
- en prévoyant un ergot ou index de positionnement sur des plaquettes de coupe arquées de toute configuration, avec arêtes de coupe et/ou pointes ;
- en utilisant les plaquettes de coupe arquées en nombre plus ou moins élevé, et dans des dispositions (angulaires et en hauteur) variables, sur des têtes de coupe de forets, conjointement avec une plaquette centrale ou principale de caractéristiques variables, voire même sans plaquette centrale ou principale ;
- en prévoyant ou non, sur le foret, des rainures d'évacuation des poussières dans la région de la concavité des plaquettes de coupe arquées ;
- en destinant ces plaquettes de coupe arquées à des outils de perçage ou forage rotatifs de tous genres, adaptés à divers types de matériaux à percer ;
- en intégrant des arêtes de coupe non linéaires, et de géométrie basée sur celle des plaquettes de coupe arquées précédemment décrites, sur une plaquette monobloc, notamment en carbure, destinée à être soudée ou brasée en bout de foret, ou autre outil de perçage rotatif analogue, afin de réaliser la partie coupante de ce dernier.

## Revendications

1. Outil de perçage rotatif, du genre foret ou analogue, possédant une tête de coupe (25 ; 29) recevant au moins une plaquette de coupe (6) de forme arquée, c'est-à-dire avec un flanc concave (7) et un flanc convexe (8), qui sont réunis par une face de base (9), par deux bords extrêmes (10, 11)parallèles à l'axe central de l'outil dont l'un au moins est apte à assurer une fonction de guidage pour le foret ou autre outil de perçage, et, du côté opposé à la face de base (9), par au moins une partie coupante, avec au moins une arête de coupe (12, 13) et/ou au moins une pointe (14, 21, 22, 23), **caractérisé en ce que** dans la tête de coupe (25; 29) de l'outil sont insérées les plaquettes arquées (6) à disposition latérale, dont les bords extrêmes (10, 11) se situent à la périphérie de la tête de coupe (25 ; 29) de l'outil, et dont les flancs convexes (8) sont tournés vers l'axe central de la tête de coupe (25 ; 29) de l'outil.

2. Outil de perçage selon la revendication 1, **caractérisé en ce que** sa tête de coupe (25) comprend une plaquette centrale plane (1) disposée suivant un diamètre de ladite tête (25), et deux plaquettes latérales arquées (6), disposées de part et d'autre de la plaquette centrale plane (1), les flancs convexes (8) des deux plaquettes arquées (6) étant tournés respectivement vers les deux grandes faces latérales opposées (5) de la plaquette centrale plane (1).

3. Outil de perçage selon la revendication 2, **caractérisé en ce qu'**il possède six points d'appui ou de guidage concentriques (cercle C), constitués par les deux extrémités (26) de la plaquette centrale plane (1), et par les deux extrémités (10, 11) de chacune des deux plaquettes latérales arquées (6).

4. Outil de perçage selon la revendication 1, **caractérisé en ce que** sa tête de coupe (29) comprend une plaquette centrale (30) de forme étoilée, à branches radiales planes (31), centrée sur l'axe de l'outil de perçage, et une pluralité de plaquettes latérales arquées (6) placées dans les secteurs définis entre les branches radiales (31) ou dans le prolongement des branches radiales (31) de la plaquette centrale (30), les flancs convexes (8) des différentes plaquettes arquées (6) étant tournés vers le centre de la plaquette centrale (30).

5. Outil de perçage selon la revendication 4, **caractérisé en ce que** les extrémités des branches (31) de la plaquette centrale (30) sont situées sur un cercle de diamètre inférieur à celui de la tête de coupe (29), la plaquette centrale (30) étant rehaussée par rapport aux plaquettes latérales arquées (6), de manière à réaliser une tête de coupe (29) "avec pilote".

6. Outil de perçage selon l'une quelconque des revendications 1 à 5, **caractérisé en ce qu'**il comporte, à sa périphérie, des rainures longitudinales (28) d'évacuation des poussières de perçage, situées dans la région de la concavité (7) de chacune des plaquettes de coupe arquées (6).

7. Outil de perçage selon l'une quelconque des revendications 1 à 6, **caractérisé en ce que** le flanc concave (7) de chaque plaquette de coupe arquée (6) est constitué par une première surface cylindrique et le flanc convexe (8) est constitué par une seconde surface cylindrique, les deux surfaces cylindriques étant coaxiales et s'étendant donc parallèlement l'une à l'autre, à une distance définissant une épaisseur (2) constante de la plaquette de coupe arquée (6).

8. Outil de perçage selon l'une quelconque des revendications 1 à 6, **caractérisé en ce que** la face de base (9) de chaque plaquette arquée (6) est une face plane.

9. Outil de perçage selon l'une quelconque des revendications 1 à 8, **caractérisé en ce que** chaque plaquette arquée (6) possède une partie coupante unique, continue, pourvue de deux arêtes de coupe (12, 13) montantes, incurvées, qui partent respectivement des sommets des deux bords extrêmes (10, 11) de la plaquette (6), et qui convergent vers la région d'une pointe (14).

10. Outil de perçage selon la revendication 9, **caractérisé en ce que** les deux arêtes de coupe (12, 13) incurvées sont d'égale longueur, la plaquette arquée (6) possédant aussi une allure générale symétrique par rapport à un plan médian.

11. Outil de perçage selon la revendication 9, **caractérisé en ce que** les deux arêtes de coupe (12, 13) incurvées sont de longueur inégale, et convergent ainsi vers la région d'une pointe (14) excentrée, la plaquette arquée (6) possédant une allure dissymétrique.

12. Outil de perçage selon l'une quelconque des revendications 1 à 8, **caractérisé en ce que** chaque plaquette arquée (6) possède deux parties coupantes distinctes avec arêtes de coupe (12, 13) respectives, qui partent respectivement des sommets des deux bords extrêmes (10, 11) de la plaquette (6), et qui sont séparées l'une de l'autre par un évidement intermédiaire (20).

13. Outil de perçage selon l'une quelconque des revendications 1 à 8, **caractérisé en ce que** chaque plaquette arquée (6) possède une partie coupante pourvue d'au moins une pointe du type "brise-béton" (21, 22, 23), en particulier deux pointes (21, 22) de ce type situées vers les extrémités de la partie coupante de la plaquette (6).

14. Outil de perçage selon la revendication 13, **caractérisé en ce que** les pointes (21, 22, 23) de la plaquette (6) sont combinées avec au moins une arête de coupe (12, 13), présente dans la ou les zones intermédiaires entre les pointes (21, 22, 23), la ou les arêtes (12, 13) faisant ainsi le raccord entre les pointes (21, 22, 23).

15. Outil de perçage selon la revendication 13, **caractérisé en ce que** la partie coupante de la plaquette (6) présente au moins un évidement (20), situé entre les pointes (21, 22, 23).

16. Outil de perçage selon l'une quelconque des revendications 1 à 15, **caractérisé en ce que** chaque plaquette de coupe arquée (6) comporte, sur son flanc concave (7) ou son flanc convexe (8), un ergot ou index (24) pour le positionnement de cette plaquette de coupe (6) dans son logement, au niveau de la tête de coupe (25 ; 29) de l'outil de perçage rotatif.

## Patentansprüche

1. Rotierendes Bohrwerkzeug des Typs Bohrer oder Ähnliches, das einen Schneidkopf (25; 29) besitzt, der mindestens eine bogenförmige Schneidplatte (6) aufnimmt, das heißt, mit einer konkaven Seite (7) und einer konvexen Seite (8), die durch eine Grundfläche (9) vereint sind, sowie durch zwei parallel zur Zentralachse des Werkzeugs verlaufende Außenkanten (10, 11), von denen mindestens eine geeignet ist, für den Bohrer oder ein anderes Bohrwerkzeug eine Führungsfunktion zu gewährleisten, und, auf der der Grundfläche (9) entgegengesetzten Seite, durch mindestens einen schneidenden Bereich mit mindestens einer Schneide (12, 13) und/oder mindestens einer Spitze (14, 21, 22, 23), **dadurch gekennzeichnet, dass** in den Schneidkopf (25; 29) des Werkzeugs die seitlich angeordneten bogenförmigen Schneidplatten (6) eingefügt sind, deren Außenränder (10, 11) sich an der Peripherie des Schneidkopfes (25; 29) des Werkzeugs befinden und deren konvexe Seiten (8) zur Zentralachse des Schneidkopfes (25; 29) des Werkzeugs hin zeigen.

2. Bohrwerkzeug nach Anspruch 1, **dadurch gekennzeichnet, dass** sein Schneidkopf (25) eine zentrale ebene Platte (1) umfasst, die einem Durchmesser dieses Kopfes (25) folgend angeordnet ist, und zwei bogenförmige Seitenschneidplatten (6) hat, die zu beiden Seiten der zentralen ebenen Platte (1) angeordnet sind, wobei die konvexen Seiten (8) der zwei bogenförmigen Schneidplatten (6) jeweils zu den zwei großen einander gegenüberliegenden Seitenflächen (5) der zentralen ebenen Platte (1) hin zeigen.

3. Bohrwerkzeug nach Anspruch 2, **dadurch gekennzeichnet, dass** es sechs konzentrische (Kreis C) Auflager- oder Führungspunkte aufweist, die von den zwei Enden (26) der zentralen ebenen Platte (1) und von den zwei Enden (10, 11) jeder der zwei bogenförmigen Seitenschneidplatten (6) gebildet sind.

4. Bohrwerkzeug nach Anspruch 1, **dadurch gekennzeichnet, dass** sein Schneidkopf (29) eine zentrale sternförmige Platte (30) mit ebenen radialen Zweigen (31) umfasst, die auf der Achse des Bohrwerkzeugs zentriert ist, und eine Vielzahl von bogenförmigen Seitenschneidplatten (6) hat, die in den zwischen den radialen Zweigen (31) abgegrenzten Bereichen oder in der Verlängerung der radialen Zweige (31) der zentralen Platte (30) angeordnet sind, wobei die konvexen Seiten (8) der verschiedenen bogenförmigen Schneidplatten (6) zum Zentrum der zentralen Platte (30) hin zeigen.

5. Bohrwerkzeug nach Anspruch 4, **dadurch gekennzeichnet, dass** die Enden der Zweige (31) der zentralen Platte (30) sich auf einem Kreis befinden, dessen Durchmesser kleiner ist als der des Schneidkopfes (29), wobei die zentrale Platte (30) bezogen auf die bogenförmigen Seitenschneidplatten (6) so erhöht ist, dass ein Schneidkopf (29) "mit Führung" realisiert wird.

6. Bohrwerkzeug nach einem der Ansprüche 1 bis 5, **dadurch gekennzeichnet, dass** es, für die Beseitigung von Bohrstäuben, an seiner Peripherie Längsrillen (28) umfasst, die sich im Bereich der Konkavität (7) jeder der bogenförmigen Schneidplatten (6) befinden.

7. Bohrwerkzeug nach einem der Ansprüche 1 bis 6, **dadurch gekennzeichnet, dass** die konkave Seite (7) jeder bogenförmigen Schneidplatte (6) von einer ersten zylinderförmigen Fläche gebildet wird und die konvexe Seite (8) von einer zweiten zylinderförmigen Fläche gebildet wird, wobei die zwei zylinderförmigen Flächen koaxial sind und also parallel zueinander mit einem Abstand verlaufen, der eine konstante Dicke (2) der bogenförmigen Schneidplatte (6) definiert.

8. Bohrwerkzeug nach einem der Ansprüche 1 bis 6, **dadurch gekennzeichnet, dass** die Grundfläche (9) jeder bogenförmigen Schneidplatte (6) eine ebene Fläche ist.

9. Bohrwerkzeug nach einem der Ansprüche 1 bis 8, **dadurch gekennzeichnet, dass** jede bogenförmige Schneidplatte (6) einen einzigen durchgehenden Schneidbereich hat, der mit zwei aufsteigenden, nach innen gewölbten Schneiden (12, 13) versehen ist, die jeweils von den oberen Spitzen der zwei Außenkanten (10, 11) der Schneidplatte (6) ausgehen und die im Bereich einer Spitze (14) zusammenlaufen.

10. Bohrwerkzeug nach Anspruch 9, **dadurch gekennzeichnet, dass** die zwei nach innen gewölbten Schneiden (12, 13) gleich lang sind, wodurch die bogenförmige Schneidplatte (6) auch eine allgemein symmetrische Form bezogen auf eine mittlere Ebene aufweist.

11. Schneidwerkzeug nach Anspruch 9, **dadurch gekennzeichnet, dass** die zwei nach innen gewölbten Schneiden (12, 13) ungleich lang sind und demnach im Bereich einer exzentrischen Spitze (14) zusammenlaufen, wodurch die bogenförmige Schneidplatte (6) eine asymmetrische Form aufweist.

12. Bohrwerkzeug nach einem der Ansprüche 1 bis 8, **dadurch gekennzeichnet, dass** jede bogenförmige Schneidplatte (6) zwei getrennte Schneidbereiche jeweils mit Schneiden (13, 14) besitzt, die jeweils von den oberen Spitzen der zwei Außenkanten (10,11) der Schneidplatte (6) ausgehen und die durch eine dazwischenliegende Aussparung (20) voneinander getrennt sind.

13. Bohrwerkzeug nach einem der Ansprüche 1 bis 8, **dadurch gekennzeichnet, dass** jede bogenförmige Schneidplatte (6) einen Schneidbereich besitzt, der mit mindestens einer Spitze des Typs "Betonbrecher" (21, 22, 23) versehen ist, insbesondere zwei Spitzen (21, 22) dieses Typs, die zu den Enden des Schneidbereichs der Schneidplatte (6) hin angeordnet sind.

14. Bohrwerkzeug nach Anspruch 13, **dadurch gekennzeichnet, dass** die Spitzen (21, 22, 23) der Schneidplatte (6) kombiniert sind mit mindestens einer Schneide (12, 13), die im Zwischenbereich oder den Zwischenbereichen zwischen den Spitzen (21, 22, 23) vorhanden ist, wodurch die Schneide oder die Schneiden (12, 13) die Verbindung zwischen den Spitzen (21, 22, 23) herstellen.

15. Bohrwerkzeug nach Anspruch 13, **dadurch gekennzeichnet, dass** der Schneidbereich der Schneidplatte (6) mindestens eine Aussparung (20) aufweist, die zwischen den Spitzen (21, 22, 23) liegt.

16. Bohrwerkzeug nach einem der Ansprüche 1 bis 15, **dadurch gekennzeichnet, dass** jede bogenförmige Schneidplatte (6) an ihrer konkaven Seite (7) oder ihrer konvexen Seite (8) einen Nocken oder Zeiger (24) hat, zur Positionierung dieser Schneidplatte (6) in ihrem Sitz im Bereich des Schneidkopfes (25; 29) des rotierenden Bohrwerkzeugs.

## Claims

1. Rotary drilling tool, such as a drill bit or the like, having a cutting head (25; 29) receiving at least one cutting tip (6) having a curved shape, in other words having one concave side (7) and one convex side (8) which are joined by a base surface (9) and by two terminal edges (10, 11) parallel to the central axis of the tool, at least one of these edges being capable of providing a guiding function for the drill bit or other drilling tool, and, on the side opposite the base surface (9), by at least one cutting part, with at least one cutting edge (12, 13) and/or at least one point (14, 21, 22, 23), **characterized in that** the curved tips (6) are inserted into the cutting head (25; 29) of the tool in lateral positions, the terminal edges (10, 11) of these tips being located on the periphery of the cutting head (25; 29) of the tool, and the convex sides (8) of these tips being turned towards the central axis of the cutting head (25; 29) of the tool.

2. Drilling tool according to Claim 1, **characterized in that** its cutting head (25) comprises a flat central tip (1) positioned along a diameter of the said head (25) and two curved side tips (6) positioned one on each side of the flat central tip (1), the convex sides (8) of the two curved tips (6) being turned respectively towards the two opposing larger lateral faces (5) of the flat central tip (1).

3. Drilling tool according to Claim 2, **characterized in that** it has six concentric bearing or guide points (circle C), consisting of the two ends (26) of the flat central tip (1) and the two ends (10, 11) of each of the two curved side tips (6).

4. Drilling tool according to Claim 1, **characterized in that** its cutting head (29) comprises a central tip (30) in the shape of a star, with flat radial branches (31), centred on the axis of the drilling tool, and a plurality of curved side tips (6) placed in the sectors formed between the radial branches (31) or in the extensions of the radial branches (31) of the central tip (30), the convex sides (8) of the different curved tips (6) being turned towards the centre of the central tip (30).

5. Drilling tool according to Claim 4, **characterized in that** the ends of the branches (31) of the central tip (30) are located on a circle whose diameter is smaller than that of the cutting head (29), the central tip (30) being raised with respect to the curved side tips (6) in such a way as to form a cutting head (29) "with a pilot bit".

6. Drilling tool according to any one of Claims 1 to 5, **characterized in that** it comprises, on its periphery, longitudinal grooves (28) for removing drilling dust, located in the region of the concavity (7) of each of the curved cutting tips (6).

7. Drilling tool according to any one of Claims 1 to 6, **characterized in that** the concave side (7) of each curved cutting tip (6) consists of a first cylindrical surface and the convex side (8) consists of a second cylindrical surface, the two cylindrical surfaces being coaxial and therefore extending parallel to each other at a distance delimiting a constant thickness (2) of the curved cutting tip (6).

8. Drilling tool according to any one of Claims 1 to 6, **characterized in that** the base surface (9) of each curved tip (6) is a flat surface.

9. Drilling tool according to any one of Claims 1 to 8, **characterized in that** each curved tip (6) has a single continuous cutting part, provided with two inwardly curving and rising cutting edges (12, 13) which originate, respectively, from the tops of the two terminal edges (10, 11) of the tip (6), and which converge towards the region of a point (14).

10. Drilling tool according to Claim 9, **characterized in that** the two inwardly curved cutting edges (12, 13) are of equal length, the curved tip (6) also having a general configuration which is symmetrical about a median plane.

11. Drilling tool according to Claim 9, **characterized in that** the two inwardly curved cutting edges (12, 13) are of unequal length, and thus converge towards the region of an eccentric point (14), the curved tip (6) having an asymmetric configuration.

12. Drilling tool according to any one of Claims 1 to 8, **characterized in that** each curved tip (6) has two separate cutting parts with corresponding cutting edges (12, 13) which originate, respectively, from the tops of the two terminal edges (10, 11) of the tip (6), and which are separated from each other by an intermediate depression (20).

13. Drilling tool according to any one of Claims 1 to 8, **characterized in that** each curved tip (6) has a cutting part provided with at least one point of the "concrete breaker" type (21, 22, 23), particularly two points (21, 22) of this type located towards the ends of the cutting part of the tip (6).

14. Drilling tool according to Claim 13, **characterized in that** the points (21, 22, 23) of the tip (6) are combined with at least one cutting edge (12, 13) present in the intermediate area or areas between the points (21, 22, 23), the edge or edges (12, 13) thus forming the connection between the points (21, 22, 23).

15. Drilling tool according to Claim 13, **characterized in that** the cutting part of the tip (6) has at least one depression (20) located between the points (21, 22, 23).

16. Drilling tool according to any one of Claims 1 to 15, **characterized in that** each curved cutting tip (6) comprises, on its concave side (7) or its convex side (8), a lug or index (24) for the positioning of this cutting tip (6) in its housing, in the cutting head (25; 29) of the rotary drilling tool.
